# EUROPEAN PATENT APPLICATION

(11) **EP 4 386 918 A1**
(43) Date of publication of application: **19.06.2024**
(21) Application number: 23835823.8
(22) Date of filing: 05.07.2023
(51) Int. Cl.: H01M 10/04, H01M 10/0587, H01M 50/213, H01M 50/249

(54) **ELECTRODE ASSEMBLY, ELECTRODE ASSEMBLY MANUFACTURING METHOD, SECONDARY BATTERY, BATTERY PACK, AND VEHICLE**

(30) Priority: 05.07.2022 KR 20220082557
(71) Applicant: LG Energy Solution, Ltd., Seoul 07335 (KR)
(72) Inventor: KIM, Taewoo, Daejeon 34122 (KR); KIM, Jinsoo, Daejeon 34122 (KR)
(74) Representative: Goddar, Heinz J.
(86) International application number: PCT/KR2023/009487
(87) International publication number: WO 2024/010357

(57) **Abstract**

An electrode assembly includes a first electrode, a separator, and a second electrode sequentially stacked. The first electrode includes a current collector and a first active material layer and a second active material layer each provided on both surfaces of the current collector. One end portion of the first electrode includes a single-sided coated portion where the first active material layer is provided on one surface of the current collector and the second active material layer is not provided on the other surface, and an uncoated portion where the first active material layer and the second active material layer are not provided on both surfaces of the current collector, and wherein the electrode assembly includes a swelling tape covering a boundary between the first active material layer of the single-sided coated portion and the uncoated portion. The present invention also provides a secondary battery, a battery pack and a vehicle including the electrode assembly, and a method for manufacturing an electrode assembly.

## Description

### [Technical Field]

The present invention relates to an electrode assembly, a method for manufacturing an electrode assembly, a secondary battery, a battery pack, and a vehicle. This application claims priority to and the benefit of Korean Patent Application No. 10-2022-0082557 filed in the Korean Intellectual Property Office on July 5, 2022, the entire contents of which are incorporated herein by reference.

### [Background Art]

Secondary batteries are easily applicable to various products because of, at least in part, their high energy densities. Thus, a secondary battery is not only commonly implemented with portable devices but is also universally implemented with an electric vehicle (EV) or a hybrid electric vehicle (HEV) that is driven by an electrical driving source.

Secondary batteries are attracting attention as a new energy source to improve eco-friendliness and energy efficiency because they reduce the negative effects of fossil fuels and because they do not generate by-products.

Currently, widely used secondary batteries include lithium ion batteries, lithium polymer batteries, nickelcadmium batteries, nickel-hydrogen batteries, nickel-zinc batteries, and the like. The operating voltage of a unit secondary battery cell is about 2.5 V to 4.5 V. Therefore, when a higher output voltage is required, a battery pack may be configured by connecting a plurality of secondary batteries in series.

In addition, a battery pack may be configured by connecting a plurality of secondary batteries in parallel according to the charge/discharge capacity required for the battery pack. Accordingly, the number of secondary batteries included in the battery pack and the form of electrical connection may be variously set according to the required output voltage and/or charge/discharge capacity.

### [Detailed Description of the Invention]

### [Technical Problem]

The present invention relates to an electrode assembly and a method for manufacturing an electrode assembly capable of realizing a high energy density by providing a swelling tape so as to cover a boundary between a single-sided coated portion where an active material layer is provided only on a single side and an uncoated portion without an active material layer in a negative electrode of an electrode assembly.

Another object of the present invention relates to a secondary battery, a battery pack, and a vehicle including the electrode assembly having an improved structure as described herein.

The technical problem to be solved by the present invention is not limited to the above-described problems, and other problems not described will be apparently understood by one skilled in the art from the following description.

### [Technical Solution]

An exemplary embodiment of the present invention provides an electrode assembly in which a first electrode, a separator, and a second electrode stacked in a sequential order, wherein the first electrode includes a current collector, a first active material layer, and a second active material layer, each of the first and second active material layers provided on both surfaces of the current collector, wherein one end portion of the first electrode includes a single-sided coated portion where the first active material layer is provided on one surface of the current collector and the second active material layer is not provided on the other surface, and an uncoated portion where the first active material layer and the second active material layer are not provided on both surfaces of the current collector, and wherein the electrode assembly includes a swelling tape configured to cover a boundary between the first active material layer of the single-sided coated portion and the uncoated portion.

Another exemplary embodiment of the present invention provides a method for manufacturing an electrode assembly, the method including: sequentially stacking a first electrode, a separator, and a second electrode, the first electrode includes a current collector, a first active material layer, and a second active material layer, each of the first and second active material layers provided on both surfaces of the current collector, one end portion of the first electrode includes a single-sided coated portion where the first active material layer is provided on one surface of the current collector and the second active material layer is not provided on the other surface, and an uncoated portion where the first active material layer and the second active material layer are not provided on both surfaces of the current collector; and positioning a swelling tape over a boundary between the first active material layer of the single-sided coated portion and the uncoated portion.

Still another exemplary embodiment of the present invention provides a secondary battery, a battery pack and a vehicle including the electrode assembly according to the exemplary embodiment described above.

### [Advantageous Effects]

In accordance with a development trend of secondary batteries requiring high capacity and high output, optimization is being performed by changing a thickness of a current collector or separator, changing sizes or structures of a battery can and a top cap, and other similar methods in order to put a large number of electrodes into a limited space.

When a copper current collector of a negative electrode is used as an outer tab, an outer tab and a separator in the existing electrode assembly are removed, and the current collector is in direct contact with and electrically connected to a battery can, so input amounts of the separator and the outer tab can be reduced. Further, an outer diameter of the electrode assembly can be reduced to secure a space within the battery can, and the overall cost of the battery assembly can be reduced.

In addition, when a copper current collector of the negative electrode is used as an outer tab, a space can be provided within the battery can that improves the capacity and output of the secondary battery. In addition, when a copper current collector is in contact with the battery can, an area where heat is transferred increases, so the thermal efficiency is improved and the energy density of the electrode is improved.

In the existing electrode assembly, if swelling tape is attached to the uncoated portion of the negative electrode current collector, not the single-sided coated portion, the swelling tape cut by a winder device is placed on the negative electrode, and wrinkles can due to the nature of the thin current collector. Therefore, when the electrode assembly is inserted into the battery can in a later secondary battery assembly process, there is a risk of damage to the electrode assembly.

According to the exemplary embodiments of the present invention, the electrode assembly includes the swelling tape provided to cover the boundary between the single-sided coated portion where the active material layer is provided only on one surface and the uncoated portion where the active material layer is not provided in the negative electrode, so that the wrinkles of the current collector and air bubbles generated in the swelling tape are minimized to control the risk of appearance defects, to prevent an increase in the outer diameter of the electrode assembly, and to eliminate the risk of damage to the electrode assembly when inserting the electrode assembly into a battery can in a secondary battery assembly process.

As a result, it is possible to improve the safety of batteries that may otherwise experience problems due to wrinkles formed on the negative electrode current collector, and thus, to stably increase the current that is applied to the battery. Accordingly, it is possible to implement a high energy density and to provide a high-capacity, high-output secondary battery.

Advantageous effects to be obtained by the present invention are not limited to the effects described above, and other effects not described herein can be clearly understood by one skilled in the art from the following description of the present invention.

### [Brief Description of Drawings]

The accompanying drawings illustrate preferred exemplary embodiments of the present invention, and together with the following description of the present invention, serve to provide further understanding of the technical spirit of the present invention, and therefore, the present invention should not be construed as being limited to the drawings.
FIG. 1 is a side cross-sectional view of a first electrode and a second electrode facing each other in an existing electrode assembly according to a Comparative Example of the present invention.
FIGS. 2(a) and 2(b) are front views of electrodes having wrinkles occuring on a current collector of a first electrode in an existing electrode assembly according to the Comparative Example of the present invention.
FIG. 3(a) is a front view of electrodes having wrinkles and air bubbles in the current collector of the first electrode and a swelling tape in the existing electrode assembly according to the Comparative Example of the present invention.
FIG. 3(b) is a front view of electrodes having wrinkles and air bubbles in the current collector of the first electrode, and where the swelling tape is transferred to a separator.
FIG. 4 is a side cross-sectional view of a first electrode and a second electrode facing each other in an electrode assembly according to an exemplary embodiment of the present invention.
FIG. 5 is a perspective view of a first electrode and a second electrode facing each other in an electrode assembly according to the exemplary embodiment of the present invention.
FIG. 6 is a top view of an end portion perpendicular to a direction of a winding axis in a jelly roll on which an electrode assembly according to an exemplary embodiment of the present invention is wound.
FIG. 7 is a front view of an electrode assembly where a seal tape is attached to an outer circumferential surface of a wound electrode assembly according to an exemplary embodiment of the present invention.
FIG. 8 is a front view of an electrode assembly where wrinkles and air bubbles are not generated in a current collector of the first electrode and a swelling tape in an electrode assembly according to an exemplary embodiment of the present invention.
FIG. 9 is a front view of a lifting phenomenon of the current collector of the first electrode occurs in an electrode assembly according to the Comparative Example of the present invention and a part for measuring a lifting height of the current collector of the first electrode.
FIG. 10 is a perspective view of a battery pack including secondary batteries according to an exemplary embodiment of the present invention.
FIG. 11 is a perspective view of a vehicle including a battery pack according to an exemplary embodiment of the present invention.

### <Explanation of Reference Numerals and Symbols>

1, 111: electrode assembly
10, 100: first electrode
11, 110: first electrode current collector
12, 120: first active material layer of first electrode
13, 130: second active material layer of first electrode
14, 140: single-sided coated portion of first electrode
15, 150: uncoated portion of first electrode
20, 200: second electrode
30, 300: separator
40, 400: swelling tape
410: swelling tape provided to cover boundary between first active material layer and uncoated portion
420: length of swelling tape covering first active material layer
430: area of swelling tape covering first active material layer
440: length of swelling tape covering uncoated portion
450: spacing length between second active material layer and swelling tape
460: length of swelling tape
470: width of swelling tape
50, 500: adsorption pad
510: stepped portion of adsorption pad
600: secondary battery
610: jelly roll
620: battery can
630: seal tape
700: battery pack
710: pack housing
800: vehicle
W: winding direction
P: length direction of electrode assembly, direction perpendicular to winding axis
H: width direction of electrode assembly, direction of winding axis
d: lifting height of first electrode current collector

### [Best Mode]

The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

Throughout the present specification, unless explicitly described to the contrary, when a part "includes," "comprises," or "has" a certain constituent element, this does not mean that another constituent element is excluded, but means that another constituent element may be further included.

In addition, terms such as "part" described in the specification should be understood as a unit that performs at least one function or operation.

The configurations described in the following description with reference to the accompanying drawings do not represent all technical concepts or ideas of the present invention but should be considered to be exemplary embodiments of the present disclosure. Therefore, it should be understood that various modifications and equivalents of the exemplary embodiments may be devised within the scope of the present invention at the time of the filing of the application.

In order to help understanding of the invention, in the accompanying drawings, some components may not be drawn to scale, but their dimensions may be exaggerated. In addition, the same reference numbers may be assigned to the same components in different exemplary embodiments.

Hereinafter, an exemplary embodiment of the present invention will be described with reference to the drawings.

An exemplary embodiment of the present invention provides an electrode assembly 111 in which a first electrode 100, a separator 300, and a second electrode 200 are stacked. The first electrode 100 includes a current collector 110, a first active material layer 120, and a second active material layer 130 each of the first and second active material layers 110, 120 provided on both surfaces of the current collector 110. One end portion of the first electrode 100 includes a single-sided coated portion 140 where the first active material layer 120 is provided on one surface of the current collector 110 and the second active material layer 130 is not provided on the other surface, and an uncoated portion 150 where the first active material layer 120 and the second active material layer 130 are not provided on both surfaces of the current collector 110. The electrode assembly 111 includes a swelling tape 410 provided to cover a boundary between the first active material layer 120 of the single-sided coated portion 140 and the uncoated portion 150.

The electrode assembly 111 includes the swelling tape 410 provided to cover the boundary between the single-sided coated portion 140 where the first active material layer 120 is provided only on one surface of the current collector 110 of the first electrode and the uncoated portion 150 where the first and second active material layers 120 and 130 are not provided, so that occurrence of wrinkles on the current collector 110 can be minimized to control the risk of appearance defects, and to eliminate the risk of damage to the electrode assembly 111 when inserting the electrode assembly 111 into a battery can 620 in an assembly process of a secondary battery 600.

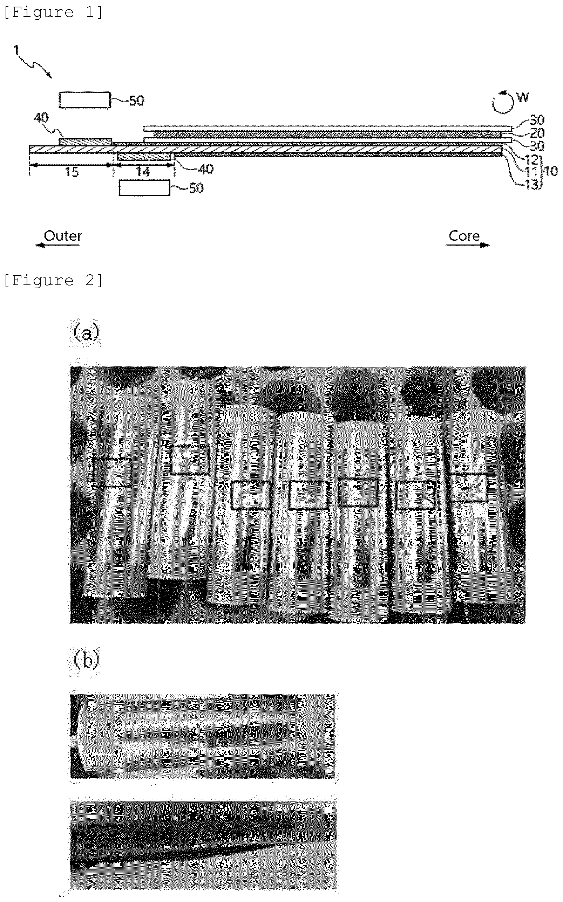

FIG. 1 is a view schematically showing a first electrode 10 and a second electrode 20 facing each other in an existing electrode assembly 1 according to a Comparative Example of the present invention.

Referring to FIG. 1, when a swelling tape 40 is attached to an uncoated portion 15 of a first electrode current collector 11 in the existing electrode assembly 1, not a single-sided coated portion 14, the swelling tape 40 cut by a winder device is placed on the first electrode 10, which may cause wrinkles to form due to the nature of the thin current collector 11. Therefore, when the electrode assembly 1 is inserted into a battery can in a later secondary battery assembly process, there is a risk of damage to the electrode assembly 1.

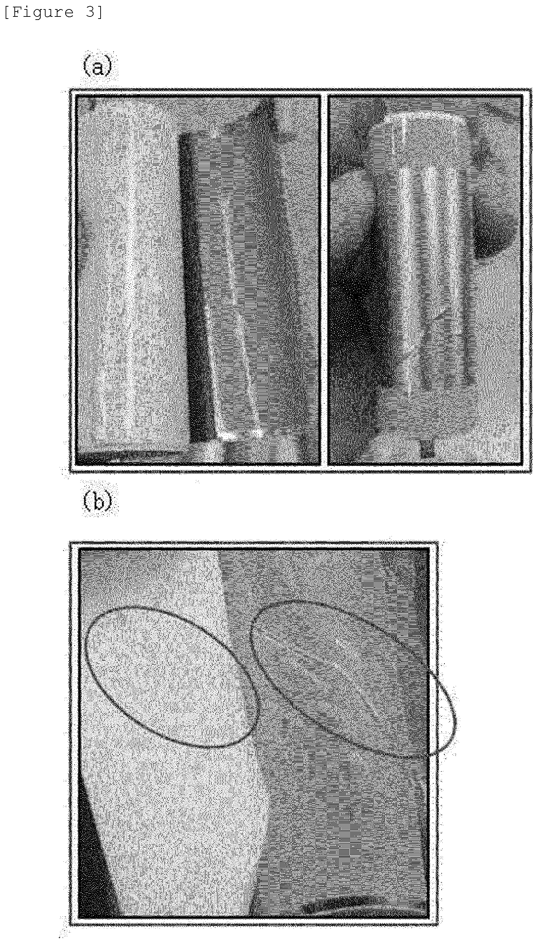

FIGS. 2(a) and 2(b) are photographs showing wrinkles and lifting occurring on a current collector of a first electrode in an existing electrode assembly according to the Comparative Example of the present invention. FIG. 3(a) is a photograph showing wrinkles and air bubbles being generated in the current collector of the first electrode and a swelling tape in the existing electrode assembly according to the Comparative Example of the present invention. FIG. 3(b) is a photograph of wrinkles and air bubbles in the current collector of the first electrode and the swelling tape are transferred to a separator.

Referring to FIGS. 2(a) and 2(b), when the swelling tape 40 is attached to the uncoated portion 15 of the first electrode current collector 11 in the existing electrode assembly rather than to the singled-sided coated portion 14, wrinkles and lifting may occur due to the nature of the thin current collector 11. If wrinkles and lifting occur on the current collector 11 of the first electrode, the electrode assembly 1 may be damaged, such as by tearing or folding of the current collector 11 of the first electrode at the time of inserting the electrode assembly 1 into a battery can in a later secondary battery assembly process.

In FIG. 3(a), the left photograph illustrates a swelling tape attached to the uncoated portion of the first electrode current collector in the existing electrode assembly, not the single-sided coated portion. Thus, air bubbles and the like are generated at the time of attaching the swelling tape, and resultantly, wrinkles and air bubbles are generated in the swelling tape. The right photograph shows a case where wrinkles are generated on the current collector of the first electrode due to the generation of wrinkles and air bubbles at the time of attaching the swelling tape.

FIG. 3(b) shows wrinkles and air bubbles generated in the current collector of the first electrode and the swelling tape are transferred to the separator.

Referring to FIGS. 3(a) and 3(b), when the wrinkles generated on the current collector 11 of the first electrode and the swelling tape 40 are transferred to the separator 30, even the electrode may be directly affected, and for example, there may be a risk of precipitation forming on the electrode active material.

In addition, when wrinkles occur on the current collector 11 of the first electrode, the electrode assembly 1 may be damaged, such as by tearing of the outermost current collector 11 at the time of inserting the electrode assembly 1 including the wrinkles into a can.

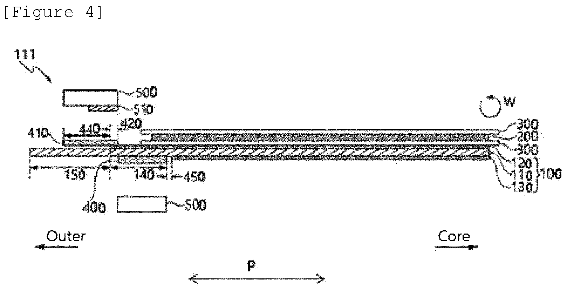

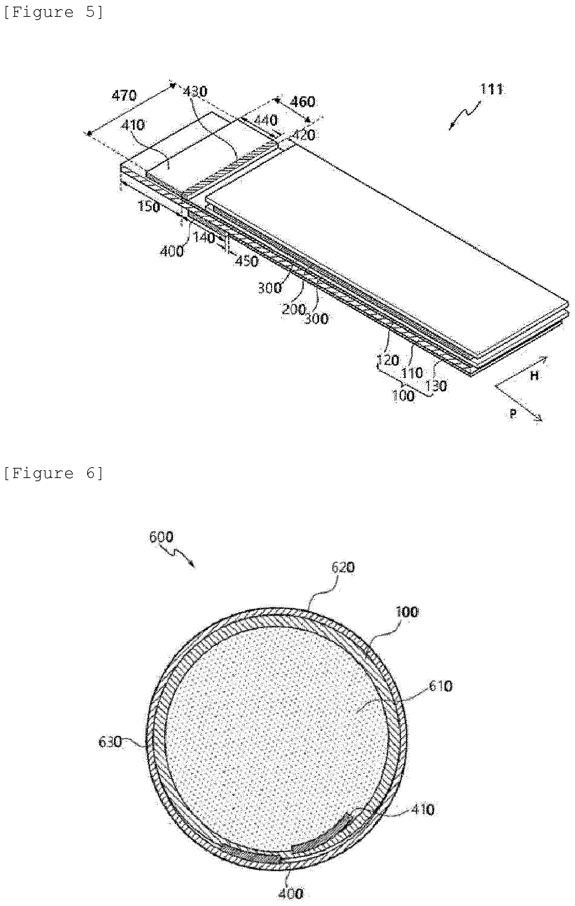

FIGS. 4 and 5 illustrate a first electrode 100 and a second electrode 200 facing each other in an electrode assembly 111 according to an exemplary embodiment of the present invention, and FIG. 6 is a plan view schematically showing an end portion perpendicular to a direction of a winding axis in a jelly roll 610 on which the electrode assembly 111 according to an exemplary embodiment of the present invention is wound.

Referring to FIGS. 4 to 6, the electrode assembly 111 includes the swelling tape 410 provided to cover the boundary between the single-sided coated portion 140 where the first active material layer 120 is provided only on one surface of the current collector 110 of the first electrode and the uncoated portion 150 where the first and second active material layers 120 and 130 are not provided. Such an arrangement minimizes the occurrence of wrinkles on the first electrode current collector 110 to control the risk of appearance defects, and to eliminates the risk of damage to the electrode assembly 111 when inserting the electrode assembly 111 into a battery can 620 in a secondary battery assembly process.

According to an exemplary embodiment of the present invention, the electrode assembly 111 has a structure in which a first electrode 100, a separator 300, and a second electrode 200 are stacked, and the first electrode includes a current collector 110 and a first active material layer 120 and a second active material layer 130 each provided on both surfaces of the current collector 110.

One end portion of the first electrode 100 includes a single-sided coated portion 140 where the first active material layer 120 is provided on one surface of the current collector 110 and the second active material layer 130 is not provided on the other surface, and an uncoated portion 150 where the first active material layer 120 and the second active material layer 130 are not provided on both surfaces of the current collector 110.

In addition, the electrode assembly 111 includes a swelling tape 410 provided to cover a boundary between the first active material layer 120 of the single-sided coated portion 140 and the uncoated portion 150.

Since the swelling tape 410 is attached from a coated portion of the first electrode 100, occurrence of air bubbles and wrinkles in the swelling tape 410 can be suppressed, and thereby, occurrence of wrinkles on the current collector 110 of the first electrode can be minimized.

The first electrode 100 is not particularly limited, and can be manufactured in such a form that the first active material layer 120 and the second active material layer 130 are bound to the first electrode current collector 110 according to a conventional method known in the art.

For example, the first active material layer 120 provided on one surface of the current collector 110 in the single-sided coated portion 140 of the first electrode 100 may be a coated portion of the first electrode 100, and the uncoated portion 150 where the first active material layer 120 and the second active material layer 130 are not provided on both surfaces of the current collector 110 in the first electrode 100 may be a non-coated portion of the first electrode 100.

The swelling tape 410 is provided to cover the boundary between the first active material layer 120 of the single-sided coated portion 140 and the uncoated portion 150 in the first electrode 100, so that when the swelling tape 410 swells due to the electrolyte solution at the time of inserting the electrode assembly 111 into the battery can 620, the wound electrode assembly 111 is pushed from a central portion of winding toward an outer portion of winding to cause the first electrode current collector 110 to contact the battery can 620 and to serve as a tab.

In such a configuration, the central portion of winding of the wound electrode assembly 111 may be a core portion of the electrode assembly 111.

According to an exemplary embodiment, the electrode assembly 111 further includes the swelling tape 400 provided on the other surface of the single-sided coated portion 140 on which the second active material layer 130 is not provided.

When the electrode assembly 111 undergoes repeated charging and discharging, one end portion of the second electrode 200 shrinks or expands, and stress is concentrated on the first electrode portion facing the end portion, which may cause cracks. When the swelling tape 400 is further provided on the other surface of the single-sided coated portion 140 on which the second active material layer 130 is not provided, occurrence of the cracks can be prevented.

In addition, when the swelling tape 400 is further provided on the other surface of the single-sided coated portion 140 on which the second active material layer 130 is not provided, the swelling tape does not overlap the swelling tape 410 provided to cover the boundary between the first active material layer 120 and the uncoated portion 150. Further, the swelling tape 400 swells to push the current collector 110 of the first electrode from the outer portion of winding toward the central portion of winding, i.e., from an outer circumference of the electrode assembly toward a central position of the electrode assembly, thereby enabling the current collector 110 of the first electrode to closely contact the battery can 620, leading to effects of reduction in resistance and heat dissipation.

According to an exemplary embodiment, the first active material layer 120 is provided on a surface facing the second electrode 200 with the separator 300 interposed therebetween, and is longer than the second electrode 200 in a length direction P of the electrode assembly.

The electrode assembly 111 may be a wound jelly roll type, and the length direction P of the electrode assembly means a direction P perpendicular to a winding axis of the wound electrode assembly.

The first active material layer 120 is provided longer than the second electrode 200 in the length direction P of the electrode assembly on the surface facing the second electrode 200 with the separator 300 interposed therebetween, so that even when the electrode assembly 111 is wound, the first active material layer 120 can be positioned to face the second electrode 200 with the separator 300 interposed therebetween, and in this case, even during charging of the electrode assembly 111, damage to the separator 300 and a decrease in battery life can be prevented.

According to an exemplary embodiment, the second active material layer 130 of the electrode assembly 111 is shorter than the second electrode 200 in the length direction P of the electrode assembly.

The electrode assembly 111 may be a wound jelly roll type, and the length direction P of the electrode assembly means a direction P perpendicular to a winding axis of the wound electrode assembly.

The second active material layer 130 is shorter than the second electrode 200 in the length direction P of the electrode assembly, so that the second active material layer can be shorter than the first active material layer 120 and longer than the second electrode 200 in the length direction P of the electrode assembly. Accordingly, the first active material layer 120 and the second active material layer 130 of the first electrode 100 may be provided in a mismatched form, and the first electrode current collector 110 provided on the outer circumferential surface of the jelly roll 610 can be exposed in the direction of the outer portion when winding the electrode assembly 111.

According to an exemplary embodiment, the electrode assembly 111 is a wound into a jelly roll type, and the first electrode 100 is the outermost electrode of the jelly roll-type electrode assembly 610.

The first electrode 100 is the outermost electrode of the wound jelly roll-type electrode assembly 610, and the first electrode current collector 110 included in the first electrode 100 on the outer circumferential surface of the jelly roll-type electrode assembly 610 can be exposed in the direction of the outer portion.

According to an exemplary embodiment, the swelling tape 410 provided to cover the boundary between the first active material layer 120 and the uncoated portion 150 is provided on an inner circumferential surface of the first electrode 100 of the jelly roll-type electrode assembly 610. Accordingly, since the current collector 110 of the first electrode is used as an outer tab, an area where the current collector 110 contacts the battery can 620 and transfers heat can be increased, so the heat generation level is improved and the energy density of the electrode can be increased.

The swelling tape 410 provided to cover the boundary between the first active material layer 120 of the single-sided coated portion 140 and the uncoated portion 150 in the first electrode 100, which is the outermost electrode of the wound jelly roll-type electrode assembly 610, so that when the swelling tape 410 swells due to the electrolyte solution at the time of putting the electrode assembly 111 into the battery can 620, the wound electrode assembly 111 is pushed from the central portion of winding toward the outer portion of winding to cause the first electrode current collector 110 to contact the battery can 620 and to serve as a tab.

According to an exemplary embodiment, the current collector 110 of the first electrode in the electrode assembly 111 includes copper. In the electrode assembly 111, for the current collector 110 of the first electrode, any material may be used without limitation as long as it is a material known in the art, and non-limiting examples of the current collector 110 of the first electrode may include a foil made of copper, gold, nickel or a copper alloy or a combination thereof.

According to one example, when the current collector 110 of the first electrode in the electrode assembly 111 includes copper, when putting the electrode assembly 111 into the battery can 620, the first electrode current collector 110 may be brought into contact with the battery can 620 to serve as a tab, and in this case, the first electrode current collector 110 may be electrically connected to the battery can 620.

According to an example, in the electrode assembly 111, the first electrode 100 is a negative electrode and the second electrode 200 is a positive electrode.

According to an exemplary embodiment of the present invention, a length 460 of the swelling tape in the length direction P of the electrode assembly in the electrode assembly 111 is 30 mm or less.
The electrode assembly 111 may be a wound jelly roll type, and the length direction P of the electrode assembly means a direction P perpendicular to a winding axis of the wound electrode assembly.
The length 460 of the swelling tape may be 30 mm or less, 28 mm or less, 25 mm or less, 23 mm or less, or 21 mm or less. The length 460 of the swelling tape may be 10 mm or longer, 13 mm or longer, 15 mm or longer, or 17 mm or longer.

When the length 460 of the swelling tape exceeds 30 mm, an attachment area where one long swelling tape is attached to the uncoated portion becomes longer, and wrinkles of the first electrode current collector may become more severe. When the length 460 of the swelling tape is less than 10 mm, the force by which the swelling tape swollen due to the electrolyte solution at the time of putting the electrode assembly into a battery can pushes the electrode assembly from the central portion of winding toward the outer portion of winding is weak, and resultantly, the first electrode current collector may not be used as a tab.

According to an exemplary embodiment, the length 420 of the swelling tape covering the first active material layer in the length direction P of the electrode assembly may be 1 mm to 3 mm. The range may be variously set according to a size, a length and a ratio of the electrode assembly.

For example, the length 420 of the swelling tape covering the first active material layer in the length direction P of the electrode assembly may be 1 mm or longer, 1.3 mm or longer, or 1.5 mm or longer. For example, the length 420 of the swelling tape covering the first active material layer in the length direction P of the electrode assembly may be 3 mm or less, 2.7 mm or less, or 2.5 mm or less.

When the length 420 of the swelling tape covering the first active material layer satisfies the above range, air bubbles generated in the swelling tape 410 can be minimized to control the risk of appearance defects, and to eliminate the risk of damage to the electrode assembly 111 when inserting the electrode assembly 111 into the battery can 620 in the assembly process of the secondary battery 600.

The length 460 of the swelling tape is the same as a length obtained by summing the length 420 of the swelling tape covering the first active material layer and the length 440 of the swelling tape covering the uncoated portion in the length direction P of the electrode assembly.

According to an exemplary embodiment, in the electrode assembly 111, a width 470 of the swelling tape in a width direction H of the electrode assembly is 50% or greater, based on 100% of a width of the electrode assembly.

The electrode assembly 111 may be a wound jelly roll type, and the width direction H of the electrode assembly refers to a direction H of the winding axis of the wound electrode assembly.

The width 470 of the swelling tape may be 50% or greater, 55% or greater, 60% or greater, 65% or greater, or 70% or greater, based on 100% of the width of the electrode assembly. The width 470 of the swelling tape may be 100% or less, 98% or less, or 96% or less, based on 100% of the width of the electrode assembly.

When the width 470 of the swelling tape satisfies the above range, the swelling tape 410 swells by the electrolyte solution at the time of putting the electrode assembly 111 into the battery can 620, thereby causing the first electrode current collector 110 to come into contact with the battery can 620 and to effectively serve as a tab.

According to an exemplary embodiment, the swelling tape 410 is provided to cover an end portion of the first active material layer 120 of the single-sided coated portion 140, and an area 430 of the swelling tape covering the first active material layer 120 is 5% to 20%.

The area 430 of the swelling tape covering the first active material layer 120 is 5% or greater, 6% or greater, 7% or greater, or 8% or greater. The area 430 of the swelling tape covering the first active material layer 120 is 20% or less, 18% or less, 16% or less, or 140 or less.

When the area 430 of the swelling tape covering the first active material layer 120 satisfies the above range, air bubbles generated in the swelling tape 410 can be minimized to control the risk of appearance defects, and to eliminate the risk of damage to the electrode assembly 111 when inserting the electrode assembly 111 into the battery can 620 in the assembly process of the secondary battery 600.

In addition, the swelling tape 410 swollen by the electrolyte solution at the time of putting the electrode assembly 111 into the battery can 620 can cause the first electrode current collector 110 to come into contact with the battery can 620 and to effectively serve as a tab.

According to one example, the swelling tape 410 does not overlap the second electrode 200.

The swelling tape 410 does not overlap the second electrode 200, so that lithium ions of the second electrode 200 can be sufficiently utilized, and the swelling tape is provided to cover the boundary between the first active material layer 120 of the single-sided coated portion 140 of the first electrode 100 and the uncoated portion 150 and can be thus effectively attached to the non-coated portion of the first electrode. Accordingly, the first electrode current collector 110, which is the non-coated portion of the first electrode, can be pushed toward the outer portion so that it comes into contact with the battery can 620.

According to an exemplary embodiment, the swelling tape 410 is configured to be swollen by an electrolyte solution. The electrolyte solution may include an organic solvent, and for example, may be ethylene carbonate (EC), dimethyl carbonate (DMC), or ethyl methyl carbonate (EMC). The swelling tape 410 may be swollen by a solvent of the electrolyte solution.

The swelling tape 410 may be swollen via an activation process and a cycle. In this case, the presence or absence of swelling of the swelling tape 410 can be confirmed depending on whether a DC resistance value (DCR) converges as the cycle proceeds after the activation process.

Specifically, a distribution of the AC resistance value (ACR) may vary according to an outer diameter of the jelly roll 610 in which the electrode assembly 111 is wound. That is, when the outer diameter of the jelly roll 610 is large, the first electrode current collector 110 can sufficiently contact the battery can 620 and the resistance is lowered, so the AC resistance value (ACR) is small, and conversely, when the outer diameter of the jelly roll 610 is small, the first electrode current collector 110 cannot sufficiently contact the battery can 620 and the resistance is relatively higher, so the AC resistance value (ACR) is large.

When the cycle proceeds after the activation process, the performance of the cell can be confirmed by a DC resistance value (DCR) rather than the AC resistance value (ACR). The DC resistance value (DCR) is different at the early stage of the cycle, but as the cycle proceeds, the swelling tape 410 is sufficiently swollen, so the DC resistance value (DCR) may converge to a constant value.

Therefore, it can be determined that the swelling tape 410 is sufficiently swollen with the converged value of the DC resistance value (DCR). For example, it can be determined that the swelling tape 410 is sufficiently swollen when the DC resistance value (DCR) converges to an equivalent DC resistance value (DCR) after 100 cycles proceed after the activation process.

**[Table 1]**

| Resistance (N=10) | 0.3C/0.5C Cycle | | | |
|---|---|---|---|---|
| | ACR (mΩ) | DCR (mΩ) | | |
| | | @ 0 cycle | @ 50 cycles | @ 100 cycles |
| resistance high | 16.3 | 22.3 | 21.8 | 21.9 |
| resistance medium | 14.5 | 21.9 | 21.6 | 21.9 |
| resistance low | 13.8 | 21.8 | 21.5 | 22.0 |

As an example, referring to Table 1, it can be seen that cells having different AC resistance values (ACR) converge to an equivalent DC resistance value (DCR) after 100 cycles proceed, whereby it can be determined that the swelling tape 410 according to the present invention is sufficiently swollen. The swelling tape 410 may be swollen or flexible by being immersed in a liquid, and may be made of a polymer material.

As one characteristic of the polymer material, a volume of the polymer material may be increased as solvent molecules enter between chains of the polymer material. Therefore, since the swelling tape 410 becomes swollen or flexible when it absorbs the electrolyte solution, the swelling tape 410 swells by the electrolyte solution at the time of putting the electrode assembly 111 into the battery can 620, thereby causing the first electrode current collector 110 to come into contact with the battery can 620 and to effectively serve as a tab.

According to an exemplary embodiment, the swelling tape 410 includes polyurethane. The swelling tape 410 is swollen by the electrolyte solution. In this case, the polyurethane included in the swelling tape 410 can be expanded by the solvent of the electrolyte solution. As the swelling tape 410 swells, the first electrode current collector 110 may come into contact with the battery can 620 and effectively serve as a tab.

According to an exemplary embodiment of the present invention, there is provided a method for manufacturing an electrode assembly 111, the method including: manufacturing an electrode assembly 111 by stacking a first electrode 100, a separator 300, and a second electrode 200, in which the first electrode 100 includes a current collector 110 and a first active material layer 120 and a second active material layer 130 each provided on both surfaces of the current collector 110, one end portion of the first electrode 100 includes a single-sided coated portion 140 where the first active material layer 120 is provided on one surface of the current collector and the second active material layer 130 is not provided on the other surface, and an uncoated portion 150 where the first active material layer 120 and the second active material layer 130 are not provided on both surfaces of the current collector 110; and arranging a swelling tape 410 provided to cover a boundary between the first active material layer 120 of the single-sided coated portion 140 and the uncoated portion 150.

The first electrode of the electrode assembly 111 includes the swelling tape 410 provided to cover the boundary between the single-sided coated portion 140 where the first active material layer 120 is provided only on one surface of the current collector 110 and the uncoated portion 150 where the first and second active material layers 120 and 130 are not provided, so that occurrence of wrinkles on the current collector 110 can be minimized to control the risk of appearance defects, and to eliminate the risk of damage to the electrode assembly 111 when inserting the electrode assembly 111 into a battery can 620 in an assembly process of a secondary battery 600.

According to an example, the description of the electrode assembly 111 is the same as that of the electrode assembly 111 according to the exemplary embodiment described above.

According to an exemplary embodiment, the method for manufacturing the electrode assembly 111 further includes arranging a swelling tape 400 provided on the other surface of the single-sided coated portion 140 on which second active material layer 130 is not provided.

When the electrode assembly 111 undergoes repeated charging and discharging, one end portion of the second electrode 200 shrinks or expands, and stress is concentrated on a portion of the first electrode 100 facing the end portion, which may cause cracks. When the swelling tape 400 is further provided on the other surface on which the second active material layer 130 is not provided, occurrence of the cracks can be prevented.

In addition, when the swelling tape 400 is further provided on the other surface of the single-sided coated portion 140 on which the second active material layer 130 is not provided, the swelling tape may be provided not to overlap the swelling tape 410 provided to cover the boundary between the first active material layer 120 and the uncoated portion 150. Further, the swelling tape 400 swells to push the current collector 110 of the first electrode from the outer portion of winding toward the central portion of winding, thereby enabling the current collector 110 of the first electrode to closely contact the battery can 620, which reduces resistance and heat dissipation.

The swelling tape 400 provided on the other surface on which the second active material layer 130 is not provided may be provided at a distance 450 from the second active material layer 130 of the electrode assembly 111. Since the swelling tape 400 is provided at a distance 450 from the second active material layer, when the swelling tape 400 is swollen by the electrolyte solution, generation of the cracks due to stress concentration can be prevented, and the current collector 110 of the first electrode and the battery can 620 may be brought into close contact with each other.

According to an exemplary embodiment, the method of manufacturing the electrode assembly 111 further includes attaching the swelling tape 410 while pushing the swelling tape 410 in a direction of the uncoated portion 150 in the single-sided coated portion 140 of the first electrode by using an adsorption pad 500 provided on the swelling tape 410 arranged to cover the boundary between the first active material layer 120 of the single-sided coated portion 140 and the uncoated portion 150.

According to one example, the adsorption pad 500 may have a stepped portion 510 thicker in the direction of the single-sided coated portion 140 than the uncoated portion 150 of the first electrode.

By using the adsorption pad 500 having the stepped portion 510, the swelling tape 410 provided to cover the boundary between the first active material layer 120 of the single-sided coated portion 140 of the first electrode and the uncoated portion 150 can be attached while pushing the same in the direction of the uncoated portion 150 from the single-sided coated portion 140 of the first electrode. Thus, the adsorption pad 500 may minimize the occurrence of air bubbles and wrinkles in the swelling tape 410, which thereby minimizes the occurrence of wrinkles on the current collector 110 of the first electrode.

According to an exemplary embodiment of the present invention, the electrode assembly 111 may be manufactured similar to the manufacturing methods of the electrode assembly 111 described above.

The description of the electrode assembly 111 is the same as that of the electrode assembly 111 according to the above-described exemplary embodiment.

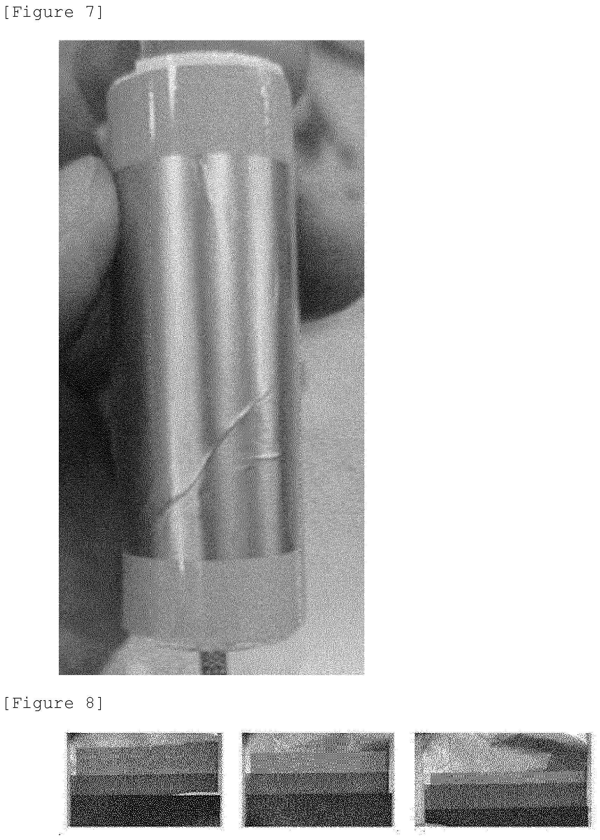

FIG. 7 is a photograph showing a seal tape attached to an outer circumferential surface of a wound electrode assembly according to an exemplary embodiment of the present invention.

Referring to FIGS. 6 and 7, a seal tape 630 may be attached on both end portions in the direction H of the winding axis of the electrode assembly, and may be, for example, a PET tape, but is not limited thereto.

The seal tape 630 is attached on both end portions in the direction H of the winding axis of the electrode assembly, so that the current collector 110 of the first electrode of the outermost portion of the electrode assembly 111 exposed to the outside because the seal tape 630 is not attached is in direct contact with the battery can 620, and thus, can serve as an electrode tab.

The seal tape 630 may be attached by 90% or greater, 92% or greater, or 94% or greater of an outer diameter of the electrode assembly 111. The seal tape 630 may be attached by 100% or less, 99% or less, or 98% or less of the outer diameter of the electrode assembly 111.

When the above range is satisfied, the seal tape 630 can prevent an increase in the outer diameter of the electrode assembly 111 and loosening of the electrode assembly 111, and facilitate insertion of the electrode assembly 111 into the battery can 620.

FIG. 8 is a photograph of an electrode assembly where wrinkles are not generated in a current collector of a first electrode and a swelling tape according to an exemplary embodiment of the present invention.

Referring to FIGS. 4 and 8, the first electrode of the electrode assembly 111 includes the swelling tape 410 provided to cover the boundary between the single-sided coated portion 140 where the first active material layer 120 is provided only on one surface of the current collector 110 and the uncoated portion 150 where the first and second active material layers 120 and 130 are not provided. Such an arrangement minimizes the occurrence of wrinkles in the current collector 110 and the swelling tape 410. The occurrence of wrinkles in the current collector 110 and the swelling tape 410 is prevented to control the risk of appearance defects of the electrode assembly 111, and to eliminate the risk of damage to the electrode assembly 111 when inserting the electrode assembly 111 into the battery can 620 in the assembly process of the secondary battery 600.

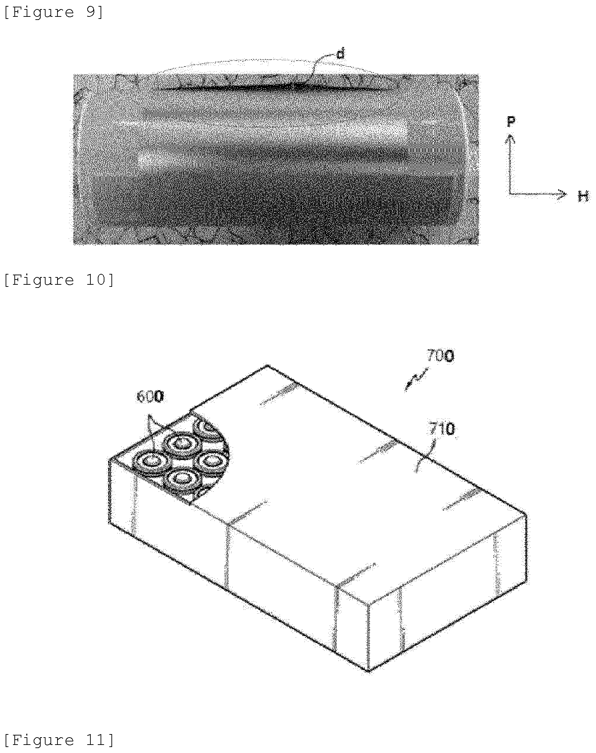

FIG. 9 is a photograph of a lifting phenomenon of the current collector of the first electrode occurs in an electrode assembly according to the Comparative Example of the present invention and a part for measuring a lifting height of the current collector of the first electrode.

Referring to FIGS. 4 and 9, the first electrode of the electrode assembly 111 includes the swelling tape 410 provided to cover the boundary between the single-sided coated portion 140 where the first active material layer 120 is provided only on one surface of the current collector 110 and the uncoated portion 150 where the first and second active material layers 120 and 130 are not provided, so that lifting of the current collector 110 can be prevented.

The existing swelling tape 40 is provided on the uncoated portion 15 of the first electrode. In this case, due to the nature of the thin current collector, wrinkles are likely to occur when attaching the swelling tape 40, and resultantly, the first electrode current collector 11 may be lifted. The lifting of the first electrode current collector 11 can be confirmed by measuring a lifting height d of the first electrode current collector with a 3D shape measuring instrument.

At an end portion of the first electrode current collector provided at a termination portion of the winding of the wound jelly roll-type electrode assembly, a space may be formed between the first electrode current collector and the first electrode current collector wound before the termination portion of the winding due to lifting of the first electrode current collector. The lifting height (d) of the first electrode current collector refers to a height of the highest portion in an outer direction of winding in the space between the wound first electrode current collectors, and a lifting degree of the first electrode current collector can be determined by measuring the lifting height.

The swelling tape 410 provided to cover the boundary of the uncoated portion 150 according to an exemplary embodiment of the present invention. The swelling tape 410 is located on the inner circumferential surface of the outermost portion of the first electrode current collector 110 in the wound jelly roll-type electrode assembly 610, and the portion of the swelling tape 410 covering the boundary between the first active material layer and the uncoated portion prevents wrinkles and lifting of the first electrode current collector 110 to control the risk of appearance defects of the electrode assembly 111, and to eliminate the risk of damage to the electrode assembly 111 when inserting the electrode assembly 111 into the battery can 620 in the assembly process of the secondary battery 600.

According to an exemplary embodiment of the present invention, there is provided a secondary battery 600 including the electrode assembly 111 according to the exemplary embodiment described above, an electrolyte, and a battery can 620 configured to accommodate the electrode assembly 111 and the electrolyte.

According to an example, the current collector 110 of the first electrode is electrically connected to the battery can 620.

In the secondary battery 600, the electrode assembly 111 according to the exemplary embodiment described above is accommodated in the battery can 620, and in this case, the swelling tape 410 swollen by the electrolyte solution pushes the first electrode current collector 110 from the central portion of winding toward the outer portion of winding to cause the first electrode current collector 110 to be electrically connected to the battery can 620 and to serve as a tab.

The swelling tape 410 is provided to cover the boundary between the first active material layer 120 of the single-sided coated portion 140 and the uncoated portion 150 in the first electrode 100, so that when the electrode assembly 111 is swollen by the electrolyte solution at the time of putting the electrode assembly 111 into the battery can 620, the wound electrode assembly 111 is pushed from the central portion of winding toward the outer portion of winding to cause the first electrode current collector 110 to contact the battery can 620 and to serve as a tab.

The secondary battery 600 may include the electrode assembly 111 according to the exemplary embodiment described above, an electrolyte, a battery can 620 accommodating the electrode assembly and the electrolyte, and a top cap.

In the electrode assembly 111, the first electrode 100 may be a negative electrode, and the second electrode 200 may correspond to a positive electrode having a polarity opposite to that of the first electrode 100. The first electrode 100 and the second electrode 200 may have a sheet shape. The electrode assembly 111 may have, for example, a jelly roll shape. That is, the electrode assembly 111 may be manufactured by winding a laminate in a winding direction (W), which is formed by stacking the first electrode 100, the separator 300, the second electrode 200, and the separator 300 sequentially.

In the present invention, a positive electrode active material coated on a positive electrode plate and a negative electrode active material coated on a negative electrode plate can be used without limitation as long as they are active materials known in the art.

Non-limiting examples of the positive electrode active material may include usual positive electrode active materials that can be used for a positive electrode of a conventional electrochemical device, and in particular, a lithium manganese oxide, a lithium cobalt oxide, a lithium nickel oxide, a lithium iron oxide, or a lithium composite oxide made by combining them may be used.

In one example, the positive electrode active material may include an alkali metal compound represented by a general formula A[AₓM_{y}]O_{2+z} (A includes at least one element of Li, Na and K; M includes at least one element selected from Ni, Co, Mn, Ca, Mg, Al, Ti, Si, Fe, Mo, V, Zr, Zn, Cu, Sc, Ru, and Cr; x≥0, 1≤x+y≤2, -0.1≤z≤2; x, y and z, and stoichiometric coefficients of components included in M are selected such that a compound remains electrically neutral).

In another example, the positive electrode active material may be an alkali metal compound xLiM¹O₂-(1-x)Li₂M²O₃ (M¹ includes at least one element having an average oxidation state of 3; M²includes at least one element having an average oxidation state of 4; 0≤x≤1) disclosed in US6,677,082, US6,680,143, the disclosures of which are incorporated by reference herein, and the like.

In another example, the positive electrode active material may be a lithium metal phosphate represented by a general formula LiₐM¹ₓFe₁₋ₓM²P_{y1-y}M³_{z}O_{4-z}(M¹includes at least one element selected from Ti, Si, Mn, Co, Fe, V, Cr, Mo, Ni, Nd, Al and Mg; M² includes at least one element selected from Ti, Si, Mn, Co, Fe, V, Cr, Mo, Ni, Nd, Al, Mg, As, Sb, Ge and S; M³includes an element in a halogen group optionally including F; 0<a≤2, 0≤x≤1, 0≤y<1, 0≤z<1; a, x, y, z, and stoichiometric coefficients of components included in M¹, M², and M³ are selected such that the compound remains electrically neutral) or Li₃M₂(PO₄)₃ [M includes at least one element selected from Ti, Si, Mn, Fe, Co, V, Cr, Mo, Ni, Al and Mg].

Preferably, the positive electrode active material may include a primary particle and/or a secondary particle in which the primary particles are aggregated.

Non-limiting examples of the negative electrode active material may include usual negative electrode active materials that can be used for a negative electrode of a conventional electrochemical device, and particularly, lithium adsorption materials such as a lithium metal or lithium alloy, carbon, petroleum coke, activated carbon, graphite or other carbonaceous materials may be used.

In one example, the negative electrode active material may use a carbon material, a lithium metal or lithium metal compound, silicon or a silicon compound, tin or a tin compound, or the like. A metal oxide such as TiO₂ and SnO₂ with a potential less than 2V may also be used as a negative electrode active material. As the carbonaceous material, both low-crystalline carbon and high-crystalline carbon may be used.

Non-limiting examples of the positive electrode current collector include a foil made of aluminum, nickel, or a combination thereof.

For the separator 300, a porous polymer film, for example, a porous polymer film made of a polyolefin-based polymer such as an ethylene homopolymer, a propylene homopolymer, an ethylene/butene copolymer, an ethylene/hexene copolymer or an ethylene/methacrylate copolymer may be used alone, or a structure obtained by laminating the polymers may be used. In another example, for the separator 300, a typical porous non-woven fabric, for example, a non-woven fabric formed of high melting point glass fibers, polyethylene terephthalate fibers, or the like may be used.

At least one surface of the separator 300 may include a coating layer of inorganic particles. In addition, it is also possible that the separator 300 itself is made of a coating layer of inorganic particles. Particles constituting the coating layer may have a structure combined with a binder so that an interstitial volume exists between adjacent particles.

The inorganic particles may be made of an inorganic material having a dielectric constant of 5 or greater. Non-limiting examples of the inorganic particles may include at least one material selected from the group consisting of Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), BaTiO₃, hafnia (HfO₂), SrTiO₃, TiO₂, Al₂O₃, ZrO₂, SnO₂, CeO₂, MgO, CaO, ZnO and Y₂O₃.

The electrolyte may be a salt having a structure such as A⁺B⁻. Here, A⁺ includes ions composed of alkali metal cations such as Li⁺, Na⁺ and K⁺ or combinations thereof. B⁻includes any one or more anions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte can also be used by dissolving it in an organic solvent. As the organic solvent, propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma (γ) butyrolactone, or mixtures thereof may be used.

Another exemplary embodiment of the present invention provides a battery pack 700 including at least one secondary battery 600 described above.

For example, the secondary battery 600 may be a cylindrical secondary battery.

The cylindrical secondary battery 600 according to the exemplary embodiment described above may be used to manufacture the battery pack 700.

FIG. 10 is a perspective view of a battery pack 700 including the secondary batteries 600 according to an exemplary embodiment of the present invention.

Referring to FIG. 10, the battery pack 700 according to an exemplary embodiment of the present invention includes an assembly in which the cylindrical secondary batteries 600 are electrically connected, and a pack housing 710 for accommodating the assembly. The cylindrical secondary battery 600 is the secondary battery 600 according to the exemplary embodiment described above. In the drawing, for convenience of illustration, components such as a bus bar, a cooling unit and an external terminal for electrical connection of the cylindrical secondary batteries are omitted.

Another exemplary embodiment of the present invention provides a vehicle 800 including at least one battery pack 700 described above. The battery pack 700 may be mounted on the vehicle 800. The vehicle 800 may be, for example, an electric vehicle, a hybrid vehicle, or a plug-in hybrid vehicle. The vehicle includes a four-wheeled vehicle or a two-wheeled vehicle.

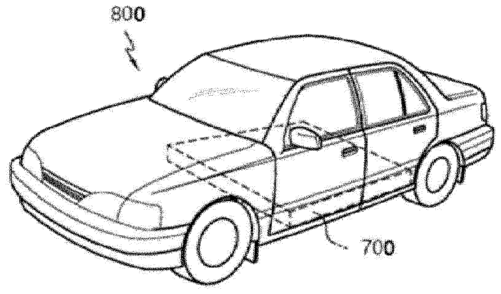

FIG. 11 is a view for illustrating the vehicle 800 including the battery pack 700 in FIG. 10.

Referring to FIG. 11, the vehicle 800 according to an exemplary embodiment of the present invention includes the battery pack 700 according to an exemplary embodiment of the present invention. The vehicle 800 operates by receiving power from the battery pack 700 according to an exemplary embodiment of the present invention.

### Examples

### Example 1

### (1) Manufacture of electrode assembly

An electrode assembly was manufactured by sequentially stacking a negative electrode (negative electrode current collector: Cu foil, negative electrode active material: 50 parts by weight of artificial graphite and 50 parts by weight of natural graphite), a sheet-like polyethylene separator, a positive electrode (positive electrode current collector: Al foil, active material: LiCoO₂) and the polyethylene separator. The negative electrode had a thickness of 187 um (Cu foil current collector: 10 pm), the positive electrode has a thickness of 147 um (Al foil current collector: 15 pm), and the two separators each having a thickness of 13 um were used.

The negative electrode includes a single-sided coated portion where a negative electrode active material layer is provided on a surface of the Cu foil facing the positive electrode and a negative electrode active material layer is not provided on the other surface, and an uncoated portion where a negative electrode active material layer is not provided on both surfaces of the Cu foil. A swelling tape made of polyurethane was attached to cover the boundary between the negative electrode active material layer provided on the surface facing the positive electrode with the separator interposed therebetween in the single-sided coated portion and the uncoated portion.

The swelling tape had a length of 2 mm covering the negative electrode active material layer in the length direction P of the electrode assembly, and was located on the inner circumferential surface of the outermost portion of the Cu foil in the wound jelly roll-type electrode assembly. In this case, the area of the swelling tape covering the negative electrode active material layer was set to 5% to 20%. The swelling tape (PU material) had 20 mm in the length direction P of the electrode assembly x 62 mm in the width direction H of the electrode assembly and a thickness of 52 um.

In addition, a swelling tape made of polyurethane was further attached to the outer circumferential surface of the outermost portion of the Cu foil in the jelly roll-type electrode assembly wound from the negative electrode. In this case, the swelling tape was attached to cover the end of the positive electrode. The swelling tape (PU material) had 20 mm in the length direction P of the electrode assembly x 62 mm in the width direction H of the electrode assembly and a thickness of 52 µm.

A jelly roll-type electrode assembly (end diameter: 20.38 mm to 20.64 mm) was manufactured by winding the stacked electrode assembly including the swelling tape. In this case, the cross-sectional diameter of the manufactured electrode assembly was 20.4 mm, and the length in the direction H of the winding axis was 66 mm.

In the wound electrode assembly, a seal tape made of PET was attached to both end portions of the winding axis. The seal tape (PET material) has 62 mm in the length direction P of the electrode assembly x 10 mm in the width direction H of the electrode assembly and a thickness of 22 um.

### (2) Manufacture of secondary battery

A secondary battery was manufactured by inserting the wound electrode assembly into a battery can (cross-sectional diameter: 20.95 mm to 21.15 mm), injecting an electrolyte solution obtained by mixing ethylene carbonate (EC) and ethyl methyl carbonate (EMC) in a volume ratio of 30:70 and dissolving LiPF₆ to a concentration of 1.0M, and sealing the cylindrical battery can with a cap assembly.

### Comparative Example 1

An electrode assembly and a secondary battery were manufactured in the same manner as in Example 1, except that the swelling tape was attached on the negative electrode current collector so as not to cover the end portion of the negative electrode active material layer provided on the surface facing the positive electrode.

### Experimental Examples

### Experimental Example 1. Number of electrode assemblies

A total of 59,200 jelly roll-type electrode assemblies manufactured and wound as in the electrode assembly of Example 1 were manufactured.

A total of 1024 jelly roll-type electrode assemblies manufactured and wound as in the electrode assembly of Comparative Example 1 were manufactured.

### Experimental Example 2. Wrinkles and lifting of the negative electrode current collector

Regarding the wrinkles of the negative electrode current collector, wrinkles formed on the non-coated portion of the current collector due to air bubbles or the like at the time of attaching the swelling tape were subjected to appearance vision inspection and observed with naked eyes. In the case of Example 1 having 1024 pieces, which were the same quantity as Comparative Example 1, were all inspected with naked eyes, and the rest were not determined to be defective in the appearance vision inspection, and thus, were not subjected to naked-eye inspection. In this case, the appearance vision inspection is an inspection in which an example picture of wrinkles is compared to pictures of the tested negative electrode current collector, and is determined to be defective if similar wrinkles are found.

The lifting phenomenon of the negative electrode current collector at the time of attaching the swelling tape was measured by a 3D shape measuring instrument (Keyence shape measuring instrument, model name: Keyence Korea One-Shot 3D VR3200). In this case, the lifting degree of the negative electrode current collector was determined by measuring a height of a space formed between the negative electrode current collector and the negative electrode current collector wound before a termination portion of the winding due to lifting of the negative electrode current collector at the end portion of the negative electrode current collector provided at the termination portion of the winding of the wound jelly roll-type electrode assembly. That is, the lifting height (d) of the negative electrode current collector was determined by measuring the height of the highest portion in the outer direction of the winding in the space between the wound negative electrode current collectors, and when the diameter of the end portion of the electrode assembly was 20.38 mm to 20.64 mm, it was determined to be defective if the lifting height (d) of the negative electrode current collector was 0.8 mm or greater.

### Experimental Example 3. Outer diameter defect

The outer diameter of the end portion perpendicular to the direction of the winding axis of the wound jelly roll-type electrode assembly was measured with an outer diameter measuring instrument of a winder conveyor, or was measured with a Go-No gauge previously drilled for each diameter.

The diameter of the end portion perpendicular to the direction of the winding axis of the electrode assembly manufactured according to Example 1 was 20.38 mm to 20.64 mm. Accordingly, when the diameter of the end portion perpendicular to the direction of the winding axis of the electrode assembly exceeded 20.64 mm, the outer diameter was indicated as being defective.

### Experimental Example 4. Damage at the time of insertion into the battery can

A case where the outermost current collector was torn or folded at the time of inserting the wound electrode assembly into the battery can due to the increase in the outer diameter (diameter of the end portion perpendicular to the direction of the winding axis of the electrode assembly: 20.38 mm to 20.64 mm) of the end portion perpendicular to the direction of the winding axis of the wound jelly roll-type electrode assembly or the wrinkles or lifting of the current collector was indicated as being damaged.

That is, when inserting the wound jelly roll-type electrode assembly into the battery can, an insertion guide that facilitates insertion of the jelly roll into the can is used. If the electrode assembly does not enter the insertion guide and is ejected by error, the electrode assembly was taken out of the battery can again and checked with naked eyes, and it was indicated that there was damage at the time of insertion into the battery can.

### Experimental Example 5. Wrinkles in the separator

If the separator had wrinkles or folds transferred from the wrinkles of the swelling tape, they were observed by naked eyes and it was indicated that the separator had wrinkles. In this case, extreme wrinkles that were not simply bulges, but rather had a foreign body feeling when touched by hand, were defined as the wrinkles and identified.

In the case of Example 1 having 1024 pieces, which were the same quantity as Comparative Example 1, all were inspected with naked eyes, and the rest were not determined to be defective in the appearance vision inspection, and thus, were not subjected to the naked-eyes inspection. In this case, the appearance vision inspection is an inspection in which an example picture of wrinkles is compared to pictures taken during testing and is determined to be defective if a similar case is found.

**[Table 2]**

| | Example 1 | Comparative Example 1 |
|---|---|---|
| Number of electrode assemblies | 59,200 | 1, 024 |
| Wrinkles of negative electrode current collector | 0 | mostly occurred |
| lifting of negative electrode current collector | 0 | 80 |
| Outer diameter defect | 0 | 22 |
| Damage at the time of insertion into the battery can | 0 | 16 |
| Wrinkles in separator | 0 | 12 |

Referring to Table 2, in the case of the electrode assembly manufactured in Example 1 of the present invention, it can be seen that there were no wrinkles and lifting on the current collector, there was no outer diameter defect accordingly, and thus, there was no damage even at the time of insertion into the can, as compared with the electrode assembly manufactured in Comparative Example 1. In addition, in the case of the electrode assembly manufactured in Example 1 of the present invention, it can be seen that wrinkles formed on the current collector were not transferred to the separator as wrinkles, as compared with the electrode assembly manufactured in Comparative Example 1.

Although the present invention has been described with reference to the limited exemplary embodiments and drawings, the present invention is not limited thereto, and a variety of modifications and variations can be made within the technical spirit of the present invention and the equivalent range of the claims described below by one skilled in the art to which the present invention belongs.

## Claims

1. An electrode assembly comprising:
a first electrode, a separator and a second electrode stacked in a sequential order,
wherein the first electrode includes a current collector, a first active material layer, and a second active material layer, each of the first and second active material layers provided on both surfaces of the current collector,
wherein one end portion of the first electrode comprises a single-sided coated portion where the first active material layer is provided on one surface of the current collector and the second active material layer is not provided on the other surface, and an uncoated portion where the first active material layer and the second active material layer are not provided on both surfaces of the current collector, and
wherein the electrode assembly includes a swelling tape configured to cover a boundary between the first active material layer of the single-sided coated portion and the uncoated portion.

2. The electrode assembly of claim 1, further comprising a swelling tape provided on the other surface of the single-sided coated portion on which the second active material layer is not provided.

3. The electrode assembly of claim 1, wherein the first active material layer is provided on a surface facing the second electrode with the separator interposed therebetween.

4. The electrode assembly of claim 3, wherein the first active material layer is longer than the second electrode in a length direction of the electrode assembly.

5. The electrode assembly of claim 1, wherein the second active material layer is shorter than the second electrode in a length direction of the electrode assembly.

6. The electrode assembly of claim 1, wherein the electrode assembly is a wound into a jelly roll-type electrode assembly.

7. The electrode assembly of claim 6, wherein the first electrode is an outermost electrode of the jelly roll-type electrode assembly.

8. The electrode assembly of claim 7, wherein the swelling tape provided to cover the boundary between the first active material layer and the uncoated portion is provided on an inner circumferential surface of the first electrode of the jelly roll-type electrode assembly.

9. The electrode assembly of claim 1, wherein the current collector of the first electrode includes copper.

10. The electrode assembly of claim 1, wherein the first electrode is a negative electrode and the second electrode is a positive electrode.

11. The electrode assembly of claim 1, wherein the swelling tape has a length of 30 mm or less in a length direction of the electrode assembly.

12. The electrode assembly of claim 1, wherein a width of the swelling tape in a width direction of the electrode assembly is 50% or greater, based on 100% of a width of the electrode assembly.

13. The electrode assembly of claim 1, wherein an area of the swelling tape covering the first active material layer is 5% to 20%, based on 100% of a total area of the swelling tape provided to cover the boundary between the first active material layer of the single-sided coated portion and the uncoated portion.

14. The electrode assembly of claim 1, wherein the swelling tape does not overlap the second electrode.

15. The electrode assembly of claim 1, wherein the swelling tape is configured to be swollen by an electrolyte solution.

16. The electrode assembly of claim 15, wherein the swelling tape includes polyurethane.

17. A method for manufacturing an electrode assembly, the method comprising:
sequentially stacking a first electrode, a separator, and a second electrode, the first electrode including a current collector, a first active material layer, and a second active material layer, each of the first and second active material layers provided on both surfaces of the current collector, one end portion of the first electrode comprises a single-sided coated portion where the first active material layer is provided on one surface of the current collector and the second active material layer is not provided on the other surface, and an uncoated portion where the first active material layer and the second active material layer are not provided on both surfaces of the current collector; and
positioning a swelling tape over a boundary between the first active material layer of the single-sided coated portion and the uncoated portion.

18. The method of claim 17, further comprising positioning a swelling tape on the other surface of the single-sided coated portion on which the second active material layer is not provided.

19. The method of claim 17, further comprising positioning an adsorption pad on the swelling tape arranged to cover the boundary between the first active material layer of the single-sided coated portion and the uncoated portion, and
attaching the swelling tape while pushing the swelling tape in a direction of the uncoated portion in the single-sided coated portion of the first electrode by using the adsorption pad.

20. The method of claim 17, wherein the adsorption pad has a stepped portion thicker in a direction of the single-sided coated portion than the uncoated portion of the first electrode.

21. An electrode assembly manufactured according to the method of any one of claims 17 to 20.

22. A secondary battery comprising:
the electrode assembly of any one of claims 1 to 16;
an electrolyte; and
a battery can configured to accommodate the electrode assembly and the electrolyte.

23. The secondary battery of claim 22, wherein the current collector of the first electrode is electrically connected to the battery can.

24. A battery pack comprising at least one secondary battery of claim 22.

25. A vehicle comprising at least one battery pack of claim 24.
